# EUROPÄISCHE PATENTANMELDUNG

(11) **EP 0 921 607 A2**
(43) Veröffentlichungstag der Anmeldung: **09.06.1999**
(21) Anmeldenummer: 98122038.7
(22) Anmeldetag: 20.11.1998
(51) Int. Cl.: H01R 13/66, H04B 10/155, G02B 6/38

(54) **Steckverbindung zum Übertragen von Daten zwischen einer elektrischen Spannungsquelle und einer Datenverarbeitungseinrichtung**

(30) Priorität: 21.11.1997 DE 19751668; 13.08.1998 DE 29814546 U
(71) Anmelder: Miltronik GmbH & Co. KG, 40724 Hilden (DE)
(72) Erfinder: Kimmerle, Hans-Georg Dr.-Ing., 44225 Dortmund (DE); Bücker, Wilhelm, 58256 Ennepetal (DE)
(74) Vertreter: Cohausz & Florack

(57) **Zusammenfassung**

Die Erfindung betrifft eine Steckverbindung zum Übertragen von Daten zwischen einer durch eine Batterie gebildeten elektrischen Spannungsquelle, insbesondere einer Fahrzeugbatterie (Traktionsbatterie), und einer Datenverarbeitungseinrichtung, wobei die Daten der elektrischen Spannungsquelle zugeordnete batterie- und/oder fahrzeugspezifische Daten sind, bestehend aus mindestens zwei Gehäuseteilen (G1,G2), die jeweils Leistungsanschlüsse (K1,K2,K1',K2') für die Abnahme bzw. die Einspeisung elektrischer Energie beinhalten zur Herstellung einer elektrischen Verbindung beim Zusammenstecken, wobei in dem ersten Gehäuseteil (G1) und dem zweiten Gehäuseteil (G2) integriert jeweils Datenübertragungskanäle vorgesehen sind mit räumlich derart einander zugeordneten Schnittstellenbereichen, daß beim Herstellen der Steckverbindung zusätzlich zu der Herstellung der Leistungsanschlußverbindung eine Datenkanalverbindung entsteht. Um eine Vorrichtung zur Verfügung zu stellen, bei der die Steckverbindung zwischen Batterie und Datenverarbeitungseinheit kompakt und einfach ist, sieht die Erfindung vor, daß an der Steckverbindung ein mit der elektrischen Spannungsquelle verbundenes Batteriekontrollgerät zur Erfassung und/oder Speicherung und zur bedarfsweisen Abgabe der zu übertragenden Daten angebracht ist.

## Beschreibung

Die Erfindung betrifft eine Steckverbindung zum Übertragen von Daten zwischen einer elektrischen Spannungsquelle, insbesondere einer Fahrzeugbatterie (Traktionsbatterie), und einer Datenverarbeitungseinrichtung, wobei die Daten der elektrischen Spannungsquelle zugeordnete batterie- und/oder fahrzeugspezifische Daten sind, bestehend aus mindestens zwei Gehäuseteilen, die jeweils Leistungsanschlüsse für die Abnahme bzw. die Einspeisung elektrischer Energie beinhalten zur Herstellung einer elektrischen Verbindung beim Zusammenstecken, wobei in dem ersten Gehäuseteil (G1) und dem zweiten Gehäuseteil (G2) integriert jeweils Datenübertragungskanäle vorgesehen sind mit räumlich derart einander zugeordneten Schnittstellenbereichen, daß beim Herstellen der Steckverbindung zusätzlich zu der Herstellung der Leistungsanschlußverbindung eine Datenkanalverbindung entsteht.

Für die Entscheidung über Einsatzmöglichkeiten und einzustellende Parameter beim Laden und Entladen einer elektrischen Spannungsquelle ist es in vielen Fällen erforderlich, über Informationen über den aktuellen Zustand der Spannungsquelle zu verfügen. Das trifft insbesondere bei Batterien zu, die als Energiespeicher in Flurförderzeugen, wie beispielsweise Gabelstaplern, verwendet werden. Die auszuwertenden Informationen können dabei die Spannung, das aktuelles Lade- und Entladeverhalten, eine Temperatur oder auch andere meßbare Daten betreffen. Desweiteren können aber auch gespeicherte Daten, wie fahrzeugspezifische Daten des Fahrzeugs, für das die elektrische Spannungsquelle verwendet wird, von Interesse sein.

Eine Batterie mit einem Batteriekontrollgerät, das derartige Daten erfaßt bzw. gespeichert hält und zur Auswertung an eine Datenverarbeitungseinrichtung überträgt, wird häufig wechselnd mit einem Fahrzeug und einer Ladestation verbunden, so daß die Verbindungen zur Datenübertragung von der Batterie zu einem Fahrzeug- oder einem Fuhrparkrechner nicht festverlegt sein können.

Aus der DE 41 23 361 A1 ist eine Vorrichtung für eine Akkumulatorenbatterie bekannt, die eine elektronische Auswertungsschaltung umfaßt, welche verschiedene Batteriedaten, wie den zeitlichen Verlauf des Lade- und Entladestroms sowie die Batteriespannung über einen Widerstand registriert und speichert. Leitungen verbinden die Schaltung mit den Batterieendpolen. Die Meßdaten werden über das Energiekabel einer Auswertungseinrichtung zugeführt.

Die in der DE 41 23 361 vorgeschlagene Vorrichtung hat den Vorteil, daß für die Übertragung der Daten von der Batterie zu einer Datenverarbeitungseinrichtung keine zusätzlichen Anschlüsse und Leitungen notwendig sind, da die Daten zusammen mit der Energie über die Energiekabel übertragen werden. Eine solche Anordnung führt jedoch insbesondere bei Fahrzeugen mit Drehstromantrieb zu erheblichen Störungen, da die Steuerung höhere harmonische Frequenzen produziert, die in dem Bereich der Trägerfrequenz liegen. Somit ist eine sichere Übertragung unmöglich. Die Verwendung höherer Trägerfrequenzen im Bereich von einigen MHz dagegen erhöht die Abstrahlung und ist geeignet, andere betriebliche Kommunikation zu stören.

Die EP 0 233 638 A2 beschreibt eine Vorrichtung zur Übertragung der Daten einer Spannungsquelle zu einer Datenverarbeitungsanlage, bei der eine eigene Verbindung für den Datentransfer verwendet wird. Trotzdem soll es möglich sein, in einem Schritt mit der Herstellung einer elektrischen Verbindung zwischen der Spannungsquelle und einer Speisestation bzw. einer Verbraucherstation eine Verbindung für die Datenübertragung herzustellen. Das wird erreicht, indem an die Außenseite von zwei Gehäuseteilen, die zusammen eine Steckverbindung darstellen und in denen die Leistungsanschlüsse angebracht sind, jeweils weitere Verbindungselemente befestigt werden, die beim Zusammenstecken der zwei Gehäuseteile ebenfalls in Verbindung kommen, entweder kontaktlos oder aber physisch.

Der Nachteil einer solchen Vorrichtung besteht darin, daß die Steckverbindung durch mehrere aneinander befestigte Gehäuse recht aufwendig wird.

Aufgabe der Erfindung ist es, eine Vorrichtung zur Verfügung zu stellen, bei der die Steckverbindung zur Datenübertragung zwischen Batterie und Datenverarbeitungseinheit kompakt und einfach ist.

Diese Aufgabe wird erfindungsgemäß dadurch gelöst, daß an der Steckverbindung ein mit der elektrischen Spannungsquelle verbundenes Batteriekontrollgerät zur Erfassung und/oder Speicherung und zur bedarfsweisen Abgabe der zu übertragenen Daten angebracht ist.

Die Aufgabe wird erfindungsgemäß ebenso dadurch gelöst, daß bei einer Steckverbindung der eingangs genannten Art auf einem der Gehäuseteile eine Batteriekontrolleinrichtung angebracht ist zum Erfassen und/oder Speichern von Fahrzeug- und/oder Batteriedaten.

Vorteil der erfindungsgemäßen Steckverbindungen ist, daß sie es ermöglichen, die Übertragung von von einer elektrischen Spannungsquelle kommenden Daten über separate Datenleitungen durchzuführen und dennoch die Verbindung für die Leistungsübertragung und die Verbindung für die Datenübertragung in einem einzigen Schritt herzustellen.

Zusätzlich werden alle benötigten Verbindungen zwischen elektrischer Spannungsquelle und Verbraucher bzw. Ladestation/Fuhrparkrechner innerhalb des Gehäuses einer einzigen Steckverbindung hergestellt, so daß die Verbindung einfacher und kompakter wird.

Bevorzugte Ausführungsformen der Erfindung gehen aus den Unteransprüchen hervor.

Werden für die Datenübertragung innerhalb der Steckverbindung Lichtleiter verwendet, über die entsprechend von der Spannungsquelle kommenden Daten moduliertes Infrarotlicht übertragen werden kann, so entfallen elektrische Kontakte auf dem Übertragungsweg, die bei häufigem Auseinanderziehen und Zusammenstecken der Steckverbindung, wie dies beispielsweise bei Batterien, die regelmäßig geladen werden, der Fall ist, hohen Beanspruchungen ausgesetzt sind, so daß die Verbindung sehr störanfällig ist.

Besonders vorteilhaft ist die Verwendung eines ohnehin vorhandenen Codierstiftes zur Einstellung der Spannung einer elektrischen Spannungsquelle für die Datenübertragung.

Wenn ein solcher Codierstift transparent ausgeführt ist, so ist er für die Leitung von Lichtwellen geeignet, und das entsprechend der ankommenden Daten modulierte Infrarotlicht kann direkt in den Codierstift eingekoppelt werden. Dadurch sind für die Datenübertragung keine zusätzliche anzubringenden Datenübertragungskanäle notwendig.

Bei elektrischen Spannungsquellen, die nur selten zwischen Verbrauchern/Ladestationen gewechselt werden, kann auch auf eine Aufmodulierung der Daten auf Infrarotlicht verzichtet und eine galvanische Verbindung der Datenleitungen verwendet werden, da die Kontakte weitaus weniger belastet werden. Wird eine solche elektrische Datenverbindung als Zweidrahtleitung in dem Codierstift untergebracht, so ermöglicht dies eine Datenübertragung ohne zusätzlichen Platzbedarf in der Steckverbindung.

Besonders vorteilhaft ist in diesen Fällen eine CAN/RS 485 2/4-Bus Verbindung.

Die Daten, die zu einem Fahrzeug- oder Fuhrparkrechner übertragen werden sollen, werden von einem Batteriekontrollgerät erfaßt bzw. gespeichert und bei Bedarf zur Verfügung gestellt. Dieses Batteriekontrollgerät, das für die Datenerfassung mit der elektrischen Spannungsquelle verbunden ist, kann an der Steckverbindung selber untergebracht sein. Auf diese

Weise erhält man eine einzige Einheit, mit der alle wesentlichen Elemente für die Datenübertragung zur Verfügung gestellt werden.

Im folgenden wird die Erfindung anhand von Zeichnungen näher erläutert. Dabei zeigt:
- Fig. 1:: einen Querschnitt durch die Gehäuseteile einer nicht zusammengesteckten Steckverbindung mit einem als Lichtleiter verwendeten Codierstift,
- Fig. 2:: einen Querschnitt durch das erste Gehäuseteil einer Steckverbindung mit zusätzlichen Infrarot-Datenübertragungskanälen,
- Fig. 3:: einen Querschnitt durch eine Steckverbindung, senkrecht zu dem Querschnitt aus Fig. 1,
- Fig. 4a:: ein erstes Gehäuseteil einer Steckverbindung mit galvanischen Kontakten für die Datenübertragung,
- Fig. 4b:: einen Querschnitt durch den Codierstift der Ausführungsform in Fig. 4a, und
- Fig. 4c:: den ersten Teil des Codierstifts aus Fig. 4a mit eingezeichneten Kontaktstellen.
- Fig. 5a:: eine seitliche Schnittansicht eines mit einer Batteriekontrolleinrichtung versehenes Gehäuseteil gemäß Erfindung
- Fig. 5b:: eine Aufsicht auf ein mit einer Batteriekontrolleinrichtung versehenes Gehäuseteil gemäß Erfindung

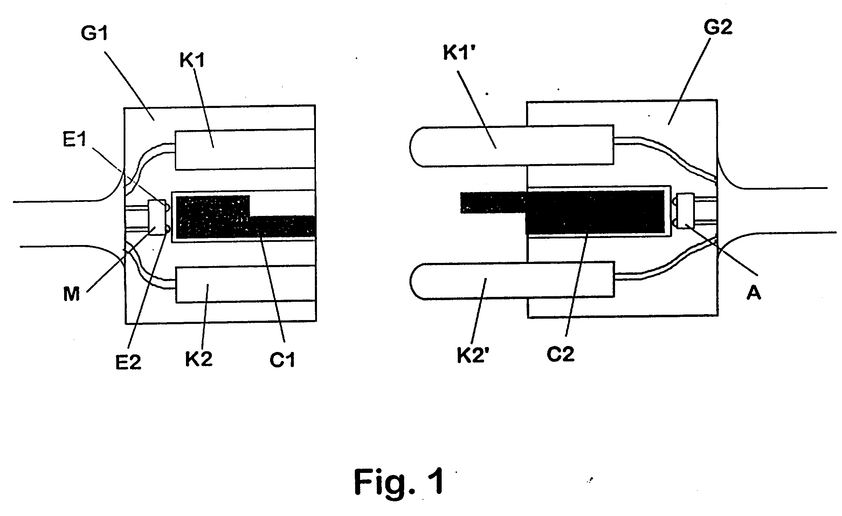

Figur 1 zeigt eine Steckverbindung in nicht zusammengestecktem Zustand, wobei die Steckverbindung aus einem ersten Gehäuseteil G1 und einem zweiten Gehäuseteil G2 besteht.

Das erste Gehäuseteil G1 ist über ein Kabel mit einer nicht dargestellten Batterie verbunden. Die Verkabelung der Batterie selber ist auf standardisierte Weise durchgeführt. Leistungskabel führen zu Leistungskontakten K1 und K2 in dem Gehäuseteil G1, die parallel zu den Gehäusewänden verlaufen und als Hohlzylinder ausgebildet sind. Über diese wird der Batterie Energie von einer Ladestation zugeführt oder von einem Verbraucher entnommen. Zwischen den beiden Leistungskontakten K1 und K2 ist, wiederum parallel zu den Gehäusewänden, ein erster Teil C1 eines sechskantiger Codierstift vorgesehen, mit dem die Spannung der Batterie eingestellt werden kann.

Datenleitungen, die ebenfalls in dem Kabel von der Batterie geführt werden, schließen in dem Stecker mit einer Modulationseinrichtung M zum Aufmodulieren ankommender Daten auf Infrarotlicht und einer Infrarotlichteinkopplungsvorrichtung E1,E2 ab. Diese Einkopplungsvorrichtung E1,E2 ist unmittelbar vor dem Anfang des Codierstiftteils C1 angeordnet.

Das zweite Gehäuseteil G2 ist über ein Kabel, in dem Leistungs- und Datenleitungen geführt werden, mit einem Verbraucher bzw. einer Ladestation verbunden. Passend zu den hohlzylinderförmigen Leistungskontakten K1 und K2 des ersten Gehäuseteils G1 weist das zweite Gehäuseteil G2 Leistungskontakte K1' und K2' auf, die aus dem Gehäuseteil G2 herausragen. Die Leistungskontakte K1' und K2' sind mit den Leistungsleitung in dem Kabel zum Verbraucher bzw. zu der Ladestation verbunden. Zwischen den beiden Leistungskontakten K1' und K2' ist ein zweiter Teil C2 des sechskantiger Codierstifts angeordnet.

Die Datenübertragung zu einer (nicht dargestellten) Datenverarbeitungseinheit eines Fuhrparks erfolgt sinnvollerweise über die Ladestation, so daß keine Abzweigung der Datenleitungen von den Leistungsleitungen in dem Kabel zu der Ladestation erforderlich ist. Die Datenleitungen, die mit dem Kabel zu einer Ladestation oder zu einem Verbraucher geführt werden, schließen in dem Stecker mit einer Infrarotlichtauskopplungsvorrichtung A ab. Diese Vorrichtung A ist unmittelbar vor dem Ende des Codierstiftteil C1 angeordnet. Der Codierstift transparent und somit zum Übertragen von Lichtwellen geeignet.

Eine Batteriekontrolleinrichtung erfaßt die interessierenden Daten der Batterie und überträgt diese über das Kabel bis zur Steckverbindung. Werden nun die beiden Gehäuseteile G1 und G2 der Steckverbindung zusammengesteckt, so schließt sich mit den Leistungskontakten K1-K1' und K2-K2' zum einen die Verbindung für eine Leistungsübertragung. Zum anderen wird aber durch das Zusammenfügen der beiden Teile des Codierstiftes C1 und C2 ein Lichtwellenleiter geschaffen, über den Daten in der Steckverbindung von der Batteriekontrolleinrichtung zu einer Datenverarbeitungseinrichtung übertragen werden können. Zu diesem Zweck werden die ankommenden Daten auf Infrarotlicht aufmoduliert und über die Einkoppelvorrichtung E1,E2 im ersten Gehäuseteil G1 in den Codierstift eingekoppelt. Auf der anderen Seite des Codierstiftes wird das Infrarotlicht über die Auskoppelvorrichtung A wieder zur Demodulation übernommen und die rückgewonnenen Daten als elektrische Signale bis zur Datenverarbeitungseinrichtung weitergeleitet.

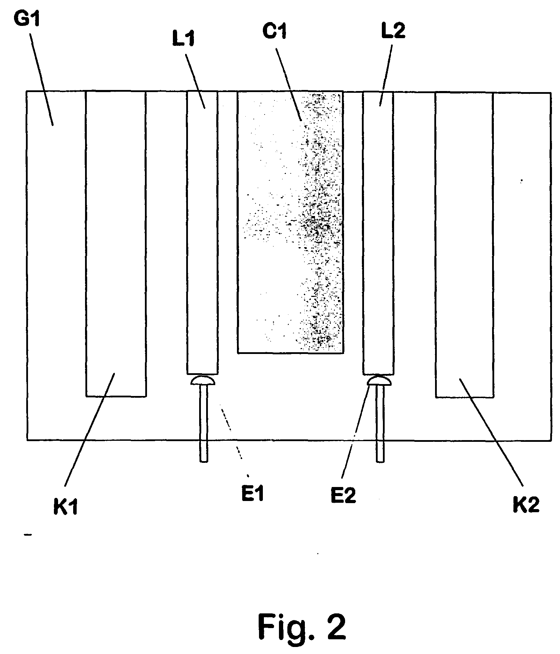

Figur 2 verdeutlicht eine zweite Ausführungsform der erfindungsgemäßen Steckverbindung für die Datenübertragung zwischen einer Batterie und einer Datenverarbeitungseinrichtung. Die gesamte Steckverbindung besteht wiederum aus einem batterieseitigen ersten Gehäuseteil G1 und einem zweiten Gehäuseteil auf Seiten der Datenverarbeitungseinrichtung. Da die beiden Gehäuseteile entsprechend der Steckverbindung in Figur 1 zusammensteckbar, aber ansonsten analog aufgebaut sind, ist hier nur das erste Gehäuseteil G1 der Steckverbindung dargestellt.

Wie auch in der Steckverbindung aus Figur 1 ist im Zentrum des Gehäuseteils G1 ist ein erster Teil C1 eines sechskantigen Codierstifts vorgesehen. Auf beiden Seiten längs des Codierstiftteils C1 sind Leistungsanschlüsse K1 und K2 angebracht, über die die normale Leistungsübertragung stattfindet.

Im Unterschied zu Figur 1 sind aber in dem Gehäuseteil G1 der Figur 2 noch zwei Lichtleiter L1 und L2 angeordnet, die zwischen Codierstiftteil C1 und jeweils einem der Leistungsanschlüsse K1 und K2 verlaufen.

Die von der Batterie kommenden Datenzuleitungen schliessen mit Infrarotlichteinkopplungsvorrichtungen E1 und E2 ab, die unmittelbar unter den Endpunkten der Lichtleiter L1 und L2 angeordnet sind.

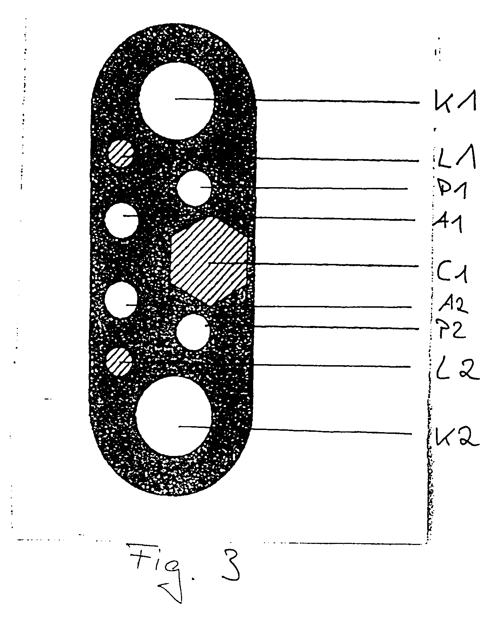

Zur Verdeutlichung der Anordnungen im Gehäuseteil G1 ist in Figur 3 zusätzlich ein Schnitt durch das Gehäuseteil G1 senkrecht zu der Darstellung aus der Figur 1 gezeigt. Hier sind wiederum der erste Codierstiftteil C1, die zwei Leistungsanschlüsse K1 und K2 sowie die zwei Lichtleiter L1 und L2 dargestellt. Zusätzlich sind noch zwei Luftleitungen A1 und A2 und zwei Pilotkontakte P1 und P2 eingezeichnet.

Eine nicht dargestellt Batterie, die eine (ebenfalls nicht dargestellte) Batteriekontrolleinrichtung umfaßt, ist mit dem Gehäuseteil G1 der Steckverbindung beispielsweise über ein Zuleitungskabel verbunden.

Die Batteriekontrolleinrichtung erfaßt die interessierenden Daten der Batterie und überträgt diese über eine Datenleitung in dem Zufuhrkabel bis zu der Steckverbindung. Nach einer Modulation von Infrarotlicht mit den ankommenden Daten wird das modulierte Infrarotlicht über die Infrarotlichteinkopplungsvorrichtungen E1 und E2 in die Lichtleiter L1 und L2 des Gehäuseteils G1 der Steckverbindung eingekoppelt. Innerhalb der Steckverbindung wird das Infrarotlicht über die Lichtleiter L1 und L2 und weiter über entsprechende Lichtleiter in dem nicht dargestellten zweiten Gehäuseteil weitergeleitet. An geeigneter Stelle auf dem Weg zur Datenverarbeitungseinrichtung, zum Beispiel vor Verlassen des zweiten Gehäuseteils, erfolgt eine Demodulation zur Rückgewinnung der erfaßten Daten aus dem modulierten Infrarotlicht.

Alternativ können die Leiter L1 und L2 auch als galvanische Verbindung ausgeführt sein.

Sowohl bei der Ausführungsform in Figur 1 wie auch bei der in Figur 2 ist es möglich, die Modulation des Infrarotlichts mit den von der Batterie kommenden Daten innerhalb der Steckverbindung oder bereits außerhalb der Steckverbindung durchzuführen und dann die modulierten Wellen über Lichtleiter in die Steckverbindung hinein zu übertragen.

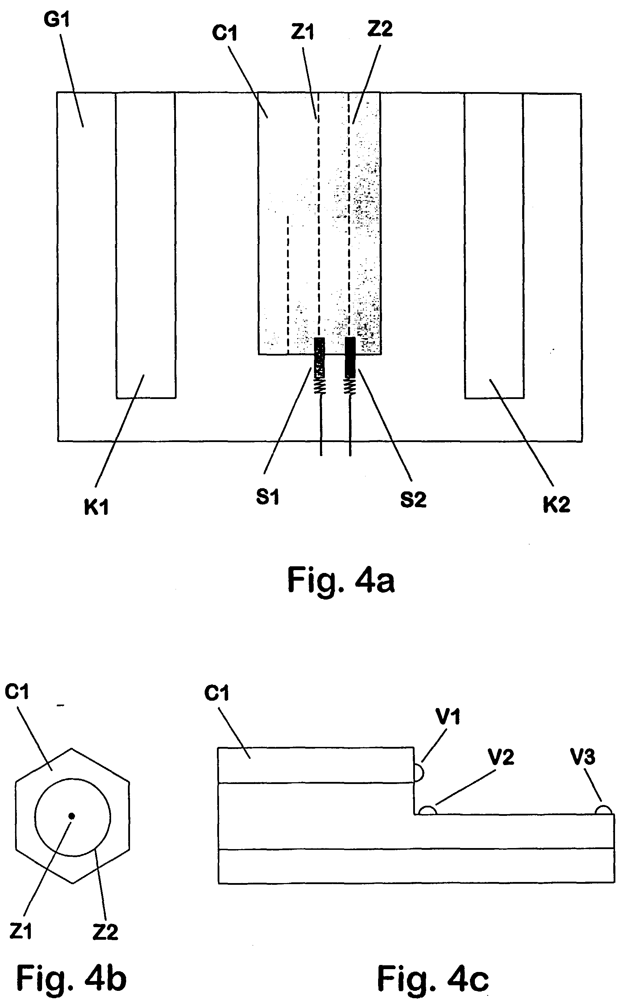

Die Figuren 4a-4c zeigen eine weitere alternative Ausführungform der Erfindung, die eine galvanischen Kopplung der Datenleitungen vorsieht.

Der allgemeine Aufbau der in Figur 4a dargestellten Steckverbindung entspricht erneut den Steckverbindungen aus den Figuren 1 und 2. Wie in Figur 2 ist wiederum nur das batterieseitige Gehäuseteil G1 einer Steckverbindung dargestellt. In den Gehäuseteilen sind Leistungsanschlüsse angeordnet und zwischen den beiden Leistungsanschlüssen ist ein sechskantiger Codierstift angebracht.

In diesem Fall verläuft aber längs durch den ersten Codierstiftteil C1 eine Zweidrahtleitung, die über Kontaktstifte S1 und S2 auf der der Batterie zugewandten Seite des Gehäuseteils G1 direkt mit durch ein Zuleitungskabel geführte Datenleitungen verbunden ist.

In Figur 4b ist ein Querschnitt durch den Codierstift zu sehen, der die Anordnung der Zweidrahtleitung in dem ersten Codierstiftteil C1 zeigt. Wie dargestellt verläuft eine erste Leitung Z1 längs durch das Zentrum des Codierstiftteils C1 und eine zweite Leitung Z2 ist ringförmig um die erste Leitung Z1 und konzentrisch zu der ersten Leitung Z1 und zu dem Codierstift angeordnet.

Analog ist eine durch den zweiten Codierstiftteil des nicht dargestellten zweiten Gehäuseteils der Steckverbindung verlaufende Zweidrahtleitung geführt, die mit einer Datenleitung zu einer Datenverarbeitungseinrichtung verbunden ist.

Das Zusammensetzen der Zweidrahtleitungen der beiden Codierstiftteile ist schließlich in Figur 4c dargestellt. Die mit der zweiten Leitung Z2 verbundene Kontaktstelle V1 des ersten Teils des Codierstifts C1 tritt bei Zusammenstecken der Steckverbindung mit der zweiten ringförmigen Leitung des zweiten Teils des Codierstifts in Kontakt, so daß eine elektrische Verbindung geschaffen wird. Entsprechend treten die mit der ersten Leitung Z1 verbundene Kontaktstellen V2 und V3 des ersten Teils des Codierstifts C1 bei Zusammenstecken der Steckverbindung mit der ersten zentralen Leitung des zweiten Teils des Codierstifts in Kontakt, so daß eine elektrische Verbindung geschaffen wird und die Daten übertragen werden können. In dem letzten Fall sind zwei Kontaktstellen V2 und V3 für die Verbindung der zentralen Leitungen vorgesehen, um einen stabilen, parallelen zusammenfügten Zustand der beiden Teile des Codierstifts zu gewährleisten.

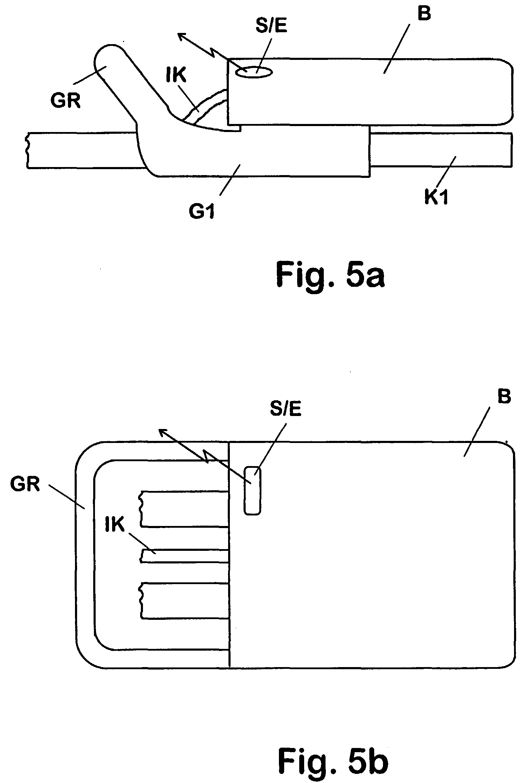

In den Figuren 5a und 5b sind schließlich verschiedene Ansichten einer mit dem batterieseitigen Gehäuseteil G1 einer Steckverbindung verbundenen Batteriekontrolleinrichtung B dargestellt.

Das Gehäuseteil G1 ist hier mit einem Griff GR versehen, welcher dem Benutzer ein vereinfachtes Zusammenstecken mit dem Gegenstück bzw. das Lösen der Steckverbindung erlaubt.

Das Gehäuseteil G1 ist über ein Kabel mit einer nicht dargestellten Batterie verbunden, wobei das Kabel von den Batteriekontakten kommende Leistungskabel umfaßt, die in dem Gehäuseteil G1 wie bereits oben beschrieben an Leistungskontakte K1 angeschlossen sind. Die Batteriekontrolleinrichtung B ist auf dem Gehäuseteil G1 aufgesteckt und weist als Schnittstelle für zu übertragende Daten neben einem Anschluß für ein Informationskabel IK, das zusammen mit den Leistungskabeln geführt wird, eine Infrarot-Sende/Empfangseinheit S/E auf. Zwischen der Batteriekontrolleinrichtung B und dem Datenkanal des Gehäuseteils G1 ist ferner eine (nicht dargestellte) Möglichkeit zur Datenübertragung vorhanden.

Die Batteriekontrolleinrichtung B empfängt Daten über das Informationskabel IK, über die Datenkanalverbindung der Steckverbindung oder über die Sende/Empfangseinheit S/E. Bei den empfangenen Daten kann es sich um feststehende Batterie- oder Fahrzeugdaten handeln, die für eine bestimmte Batterie bzw. für ein bestimmtes Fahrzeug nur bei Wechsel der Batterie oder des Fahrzeugs erneut eingegeben werden müssen, oder aber um ständig zu aktualisierende Zustandsdaten der Batterie. Die erfaßten Daten werden in der Batteriekontrolleinrichtung B gespeichert und bei Bedarf ausgegeben. Die Ausgabe erfolgt ebenfalls entweder direkt über das Informationskabel IK oder die Sende/Empfangseinheit S/E oder aber über die Datenkanalverbindung der Steckverbindung.

Die Datenübertragung zwischen dem dargestellten batterieseitigen Gehäuseteil G1 und dem Gehäuseteil, das mit einer Datenverarbeitungseinrichtung verbunden ist, erfolgt auf eine der oben beschriebenen Arten.

## Patentansprüche

1. Steckverbindung zum Übertragen von Daten zwischen einer durch eine Batterie gebildeten elektrischen Spannungsquelle, insbesondere einer Fahrzeugbatterie (Traktionsbatterie), und einer Datenverarbeitungseinrichtung, wobei die Daten der elektrischen Spannungsquelle zugeordnete batterie- und/oder fahrzeugspezifische Daten sind, bestehend aus mindestens zwei Gehäuseteilen (G1,G2), die jeweils Leistungsanschlüsse (K1,K2,K1',K2') für die Abnahme bzw. die Einspeisung elektrischer Energie beinhalten zur Herstellung einer elektrischen Verbindung beim Zusammenstecken, wobei in dem ersten Gehäuseteil (G1) und dem zweiten Gehäuseteil (G2) integriert jeweils Datenübertragungskanäle vorgesehen sind mit räumlich derart einander zugeordneten Schnittstellenbereichen, daß beim Herstellen der Steckverbindung zusätzlich zu der Herstellung der Leistungsanschlußverbindung eine Datenkanalverbindung entsteht **dadurch gekennzeichnet**, daß an der Steckverbindung ein mit der elektrischen Spannungsquelle verbundenes Batteriekontrollgerät zur Erfassung und/oder Speicherung und zur bedarfsweisen Abgabe der zu übertragenden Daten angebracht ist.

2. Steckverbindung zum Übertragen von Daten zwischen einer durch eine Batterie gebildeten elektrischen Spannungsquelle, insbesondere einer Fahrzeugbatterie (Traktionsbatterie), und einer Datenverarbeitungseinrichtung, wobei die Daten der elektrischen Spannungsquelle zugeordnete batterie- und/oder fahrzeugspezifische Daten sind, bestehend aus mindestens zwei Gehäuseteilen (G1,G2), die jeweils Leistungsanschlüsse (K1,K2,K1',K2') für die Abnahme bzw. die Einspeisung elektrischer Energie beinhalten zur Herstellung einer elektrischen Verbindung beim Zusammenstecken, wobei in dem ersten Gehäuseteil (G1) und dem zweiten Gehäuseteil (G2) integriert jeweils Datenübertragungskanäle vorgesehen sind mit räumlich derart einander zugeordneten Schnittstellenbereichen, daß beim Herstellen der Steckverbindung zusätzlich zu der Herstellung der Leistungsanschlußverbindung eine Datenkanalverbindung entsteht.
**dadurch gekennzeichnet**,
daß auf einem der Gehäuseteile (G1,G2) eine Batteriekontrolleinrichtung (B) angebracht ist zum Erfassen und/oder Speichern von Fahrzeug- und/oder Batteriedaten.

3. Steckverbindung nach einem der voranstehenden Ansprüche, **dadurch gekennzeichnet**, daß sie zusätzlich einen, insbesondere sechskantigen, Codierstift zum Einstellen der Batteriespannung aufweist, der aus einem ersten, dem ersten Gehäuseteil (G1) zugeordneten Teil (C1) und einem zweiten, dem zweiten Gehäuseteil (G2) zugeordneten Teil (C2) besteht, wobei beide Teile (C1,C2) in zusammengestecktem Zustand der Steckverbindung formschlüssig verbunden sind.

4. Steckverbindung nach Anspruch 3, **dadurch gekennzeichnet**,
- daß der Codierstift (C1,C2) transparent ist,
- daß das erste Gehäuseteil (G1) der Steckverbindung Mittel (M) zum Aufmodulieren der Daten auf Infrarotlicht umfaßt,
- daß das erste Gehäuseteil (G1) der Steckverbindung Mittel (E1,E2) zum Einkoppeln des modulierten Infrarotlichtes in den Codierstift (C1,C2) umfaßt,
- daß das zweite Gehäuseteil (G2) der Steckverbindung Mittel zum Auskoppeln des modulierten Infrarotlichtes aus dem Codierstift (C1,C2) umfaßt, und
- daß das zweite Gehäuseteil (G1) der Steckverbindung Mittel zum Rückgewinnen der Daten aus dem modulierten Infrarotlicht umfaßt.

5. Steckverbindung nach Anspruch 3, **dadurch gekennzeichnet**,
- daß indem ersten Teil und in dem zweiten Teil des Codierstifts (C1,C2) jeweils eine Zweidrahtleitung integriert ist,
- daß von der Spannungsquelle kommende elektrische Datenleitungen mit der Zweidrahtleitung in dem ersten Gehäuseteil elektrisch verbunden sind,
- daß die Zweidrahtleitungen im ersten Teil und im zweiten Teil des Codierstifts (C1,C2) in zusammengesteckten Zustand der Steckverbindung über Kontakte (V1,V2,V3) derart in Verbindung gebracht werden, daß ein Übertragen der Daten von der elektrischen Spannungsquelle ermöglicht wird, und
- daß zu der Datenverarbeitungseinrichtung führende elektrische Datenleitungen mit der Zweidrahtleitung in dem zweiten Gehäuseteil elektrisch verbunden sind.

6. Steckverbindung nach Anspruch 5, **dadurch gekennzeichnet**, daß die Verbindung zur Übertragung einer CAN/RS 485 2/4-Bus-Verbindung entspricht.

7. Steckverbindung nach einem der Anprüche 1 -3, **gekennzeichnet**
**durch** als Lichtleiter (L1,L2) ausgeführte Datenübertragungskanäle in dem ersten Gehäuseteil (G1), geeignet zum Übertragen von moduliertem Infrarotlicht, und
**durch** Mittel zum Aufmodulieren der Daten auf Seiten der elektrischen Spannungsquelle auf Infrarotlicht und zum Einkoppeln (E1,E2) des modulierten Infrarotlichtes in die Lichtleitern (L1,L2) des ersten Gehäuseteils (G1).

8. Steckverbindung nach einem der Anprüche 1 -3, **dadurch gekennzeichnet**, daß das erste Gehäuseteil (G1) unmittelbar an der Schnittstelle zu dem zweiten Gehäuseteil (G2) Mittel zum Aufmodulieren der Daten auf Infrarotlicht und zum Abgeben des modulierten Infrarotlichts umfaßt, und daß zusätzliche elektrische Datenleitungen in dem ersten Gehäuseteil (G1) bis zu den Mitteln zum Aufmodulieren der Daten auf Infrarotlicht zum Übertragen der Daten vorgesehen sind.

9. Steckverbindung nach einem der Ansprüche 4, 7 oder 8, **dadurch gekennzeichnet**, daß die Mittel zum Aufmodulieren der Daten auf Infrarotlicht und zum Abgeben des modulierten Infrarotlichts zwischen der elektrischen Spannungsquelle und dem ersten Gehäuseteil (G1) der Steckverbindung oder in dem ersten Gehäuseteil (G1) der Steckverbindung angeordnet sind.

10. Steckverbindung nach einem der Ansprüche 7-9, **dadurch gekennzeichnet**, daß das zweite Gehäuseteil (G2) auf Seiten des Verbrauchers bzw. einer speisenden Energiequelle Lichtwellenleiter zum Weiterleiten des empfangenen, modulierten Infrarotlichtes umfaßt, und daß auf dem Weg der Daten zu der Datenverarbeitungseinrichtung Mittel zur Rückgewinnung der auf Infrarotlicht modulierten Daten und zum Weiterleiten der Daten zu der Datenverarbeitungseinrichtung vorgesehen sind.

11. Steckverbindung nach einem der Ansprüche 7-9, **dadurch gekennzeichnet**, daß das zweite Gehäuseteil (G2) auf Seiten des Verbrauchers bzw. einer speisenden Energiequelle unmittelbar an der Schnittstelle zu dem ersten Gehäuseteil (G1) Mittel zum Empfangen des aus dem ersten Gehäuseteil (G1) übertragenen Infrarotlichts und zur Rückgewinnung der auf Infrarotlicht modulierten Daten umfaßt, die mit elektrischen Datenleitungen zum Weiterleiten der Daten zu der Datenverarbeitungseinrichtung verbunden sind.

12. Steckverbindung nach Anspruch 2-11, **dadurch gekennzeichnet**, daß die Batteriekontrolleinrichtung (B) auf dem Gehäuseteil (G1) angebracht ist, das mit der elektrischen Spannungsquelle verbunden ist.

13. Steckverbindung nach Anspruch 2-12, **dadurch gekennzeichnet**, daß die Batteriekontrolleinrichtung (B) Mittel aufweist zum Einspeisen oder Lesen von Daten in den bzw. aus dem Datenübertragungskanal des Gehäuseteils (G1), auf dem die Batteriekontrolleinrichtung (B) angebracht ist.

14. Steckverbindung nach einem der Ansprüche 2-13, **dadurch gekennzeichnet**, daß die Batteriekontrolleinrichtung (B) einen Kabelanschluß (IK) für eine drahtgebundene Datenübertragung zwischen der Batteriekontrolleinrichtung (B) und der elektrischen Spannungsquelle und/oder einer Datenverarbeitungseinrichtung umfaßt.

15. Steckverbindung nach einem der Ansprüche 2-14, **dadurch gekennzeichnet**, daß die Batteriekontrolleinrichtung (B) eine Infrarot-Sende/Empfangseinheit (S/E) umfaßt für die Datenübertragung zwischen der Batteriekontrolleinrichtung (B) und der elektrischen Spannungsquelle und/oder einer Datenverarbeitungseinrichtung.

16. Steckverbindung nach einem der Ansprüche 2-15, **dadurch gekennzeichnet**, daß die Batteriekontrolleinrichtung (B) eine Funk-Sende/Empfangseinheit (S/E) umfaßt für die Datenübertragung zwischen der Batteriekontrolleinrichtung (B) und der elektrischen Spannungsquelle und/oder einer Datenverarbeitungseinrichtung.

17. Steckverbindung nach einem der voranstehenden Ansprüche, **dadurch gekennzeichnet**, daß mindestens eines der Gehäuseteile (G1) einen Griff (GR) zum Verbinden bzw. Lösen dieses Gehäuseteils (G1) mit bzw. von dem anderen Gehäuseteil umfaßt.
